# EUROPÄISCHE PATENTSCHRIFT

(11) **EP 1 577 081 B1**
(45) Veröffentlichungstag und Bekanntmachung des Hinweises auf die Patenterteilung: **12.09.2012**
(21) Anmeldenummer: 05005194.5
(22) Anmeldetag: 10.03.2005
(51) Int. Cl.: B65D 77/04, B29C 65/20, B29C 65/78

(54) **Verfahren zur Herstellung von Kunststoffbehältern für Flüssigkeiten**
Process for making synthetic containers for liquids
Procédé pour la fabrication de conteneurs synthétiques pour liquides

(30) Priorität: 18.03.2004 DE 102004013224
(43) Veröffentlichungstag der Anmeldung: 21.09.2005
(73) Patentinhaber: Schütz GmbH & Co. KGaA, 56242 Selters / Westerwald (DE)
(72) Erfinder: Schütz, Udo, 56242 Selters/Westerwald (DE)
(74) Vertreter: advotec.

(56) Entgegenhaltungen:
- WO-A-2005/082739
- DE-A1- 3 442 700
- DE-A1- 3 711 728
- DE-A1- 10 146 822
- DE-A1- 10 237 808
- JP-A- 5 170 241

## Beschreibung

Die Erfindung betrifft ein Verfahren zur Herstellung von Kunststoffbehältern für Flüssigkeiten, mit vier Seitenwänden, einem unteren und einem oberen Boden, einer verschließbaren Einfüllöffnung im oberen Boden und einer Entnahmearmatur aus Kunststoff, insbesondere einem Klappen- oder Kugelhahn, mit einem Armaturengehäuse, das einen Einlauf- und einen Auslaufstutzen aufweist, wobei der Einlaufstutzen des Armaturengehäuses an eine Entleeröffnung in einer unteren Einwölbung der Vorderwand des Behälters zur Aufnahme der Entnahmearmatur angeschlossen ist. Ein derartiges Stand des Technik ist der WO 2005/82739 entnehmbar.

Zur Herstellung eines aus der DE 102 37 808 A1 bekannten Kunststoffbehälters mit einer als Klappenhahn ausgebildeten Entnahmearmatur für Flüssigkeiten, der als Palettenbehälter zum Einsatz kommt, wird beim Blasformen des Flüssigkeitsbehälters ein als Kunststoff-Spritzgießteil vorgefertigter, in eine Blasform eingelegter Entleerstutzen mit einem Außengewinde mit dem Behälter verschweißt. Nach dem Entformen des abgekühlten Behälters wird mit einem in den Entleerstutzen eingeführten Schneidwerkzeug die Entleeröffnung aus der Behälterwand ausgeschnitten. Anschließend wird die Entnahmearmatur mit einer Überwurfmutter an den Entleerstutzen des Flüssigkeitsbehälters angeschraubt.

Bei einem weiteren bekannten Verfahren zur Herstellung von Flüssigkeitsbehältern aus Kunststoff mit einer Entnahmearmatur wird beim Blasformen eines Behälters der Einlaufstutzen des als Kunststoff-Spritzgießteil vorgefertigten, in eine Blasform eingelegten Armaturengehäuses mit dem Behälter verschweißt. Nach dem Entformen des abgekühlten Behälters wird mit einem in das Armaturengehäuse eingeführten Schneidwerkzeug die Entleeröffnung aus der Behälterwand ausgeschnitten. Anschließend werden das Absperrorgan und die Betätigungswelle mit dem Bedienungshebel in das Armaturengehäuse eingebaut.

Bei den beiden bekannten Herstellungsverfahren wird durch das erforderliche Einlegen des Entleerstutzens bzw. des Armaturengehäuses in die Blasform der Blasformzyklus entsprechend verlängert und dadurch die Produktionsleistung der Fertigungsanlage verringert. Bei dem zweiten Herstellungsverfahren wird durch die notwendige Fertigmontage der Entnahmearmatur nach dem Blasformen des Flüssigkeitsbehälters die Produktionsleistung der Fertigungsanlage zusätzlich gemindert.

Der Erfindung liegt die Aufgabe zugrunde, Verfahren zur Herstellung von mit einer Entnahmearmatur ausgestatteten Flüssigkeitsbehältern zu entwickeln, die gegenüber den bekannten Fertigungsverfahren höhere Produktionsleistungen ermöglichen.

Diese Aufgabe ist erfindungsgemäß gelöst durch die Herstellungsverfahren gemäß den Patentansprüchen 1 und 2.

Die Erfindung ist nachstehend anhand von Zeichnungsfiguren erläutert, die folgendes darstellen:
- Fig.1: eine perspektivische Darstellung eines als Palettenbehälter ausgebildeten Flüssigkeitsbehälters aus Kunststoff mit einer Entnahmearmatur,
- Fig. 2: eine vergrößerte perspektivische Darstellung des Auslaufbereichs des blasgeformten Flüssigkeitsbehälters,
- Fig. 3: einen Längsschnitt des Auslaufbereichs des Flüssigkeitsbehälters mit einer angeschweißten Entnahmearmatur,
- Fig. 4: einen Längsschnitt des Auslaufbereichs eines Flüssigkeitsbehälters mit einem angeschweißten Entleerstutzen und
- Fig. 5: einen Längsschnitt des an den Auslaufbereich des Flüssigkeitsbehälters angeschweißten Entleerstutzens nach Fig. 4 mit einer an diesen angeschraubten Entnahmearmatur.

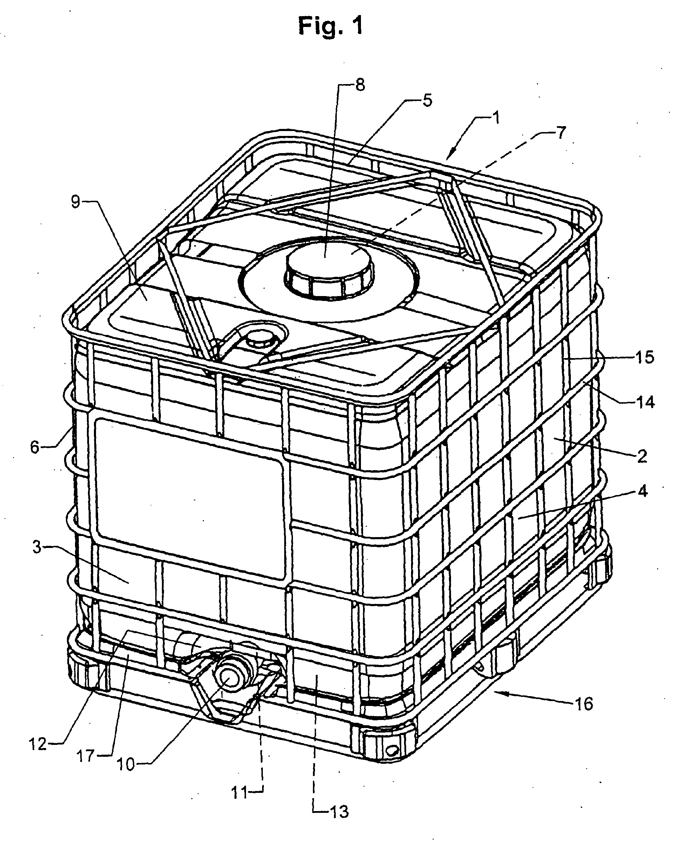

Der als Einweg- und Mehrwegbehälter einsetzbare Transport-und Lagerbehälter 1 nach Figur 1 weist als Hauptbauteile einen austauschbaren, quaderförmigen Behälter 2 aus Kunststoff für Flüssigkeiten mit vier Seitenwänden 3-6 auf, der mit einem mit einem Deckel 8 verschließbaren Einfüllstutzen 7 im oberen Boden 9 und einer Entnahmearmatur 10 ausgestattet ist, die an eine Entleeröffnung 11 in einer domartigen Einwölbung 12 der Vorderwand 3 des Behälters 2 im Bereich des unteren Bodens 13 des Behälters zur Aufnahme der Entnahmearmatur 10 angeschlossen ist, ferner einen Außenmantel aus sich kreuzenden, waagrechten und senkrechten Gitterstäben 14,15 aus Metall sowie ein palettenartiges Untergestell 16 mit euronormgerechten Längen-und Breitenabmessungen, dessen als flache Bodenwanne ausgebildeter Boden 17 aus Blech den Kunststoffbehälter 2 abstützt.

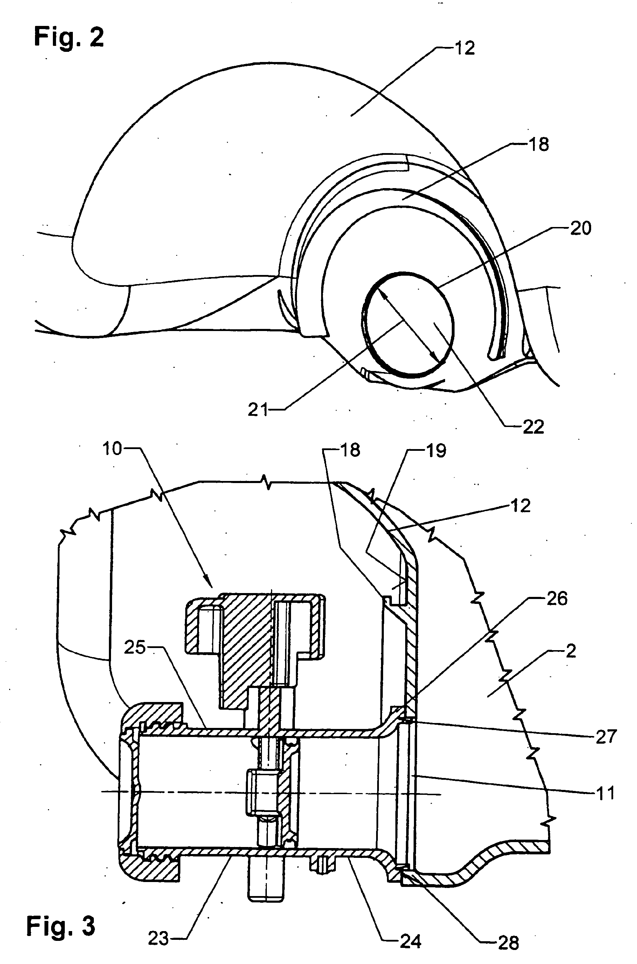

Der Behälter 2 zur Aufnahme von Flüssigkeiten wird mit einem ringförmigen Haltesegment 18 an der Außenseite 19 der Einwölbung 12 der Behältervorderwand 3 zum Zentrieren und Halten des fertig geblasenen Behälters 2 in einer Schweißmaschine und einer runden Vertiefung 20 in der Außenseite 19 der Einwölbung 12 mit einem der Nennweite der als Klappen- oder Kugelhahn ausgebildeten Entnahmearmatur 10 entsprechenden Durchmesser 21 blasgeformt (Fig. 2). Nach dem Entformen des abgekühlten Behälters 2 wird der Boden 22 der Vertiefung 20 mit einem in dieser zentrierten Schneidwerkzeug zur Ausbildung der Entleeröffnung 11 des Behälters 2 ausgeschnitten. Anschließend wird die Entnahmearmatur 10, deren spritzgegossenes Gehäuse 23 aus Kunststoff einen Einlaufstutzen 24 und einen Auslaufstutzen 25 aufweist, mit einem an deren Einlaufstutzen 24 angeformten Befestigungsflansch 26, der durch einen Ringansatz 27 in der Entleeröffnung 11 des Behälters 2 zentriert wird, am Außenrand 28 der Entleeröffnung 11 mittels einer Spiegelschweißmaschine angeschweißt (Fig. 3).

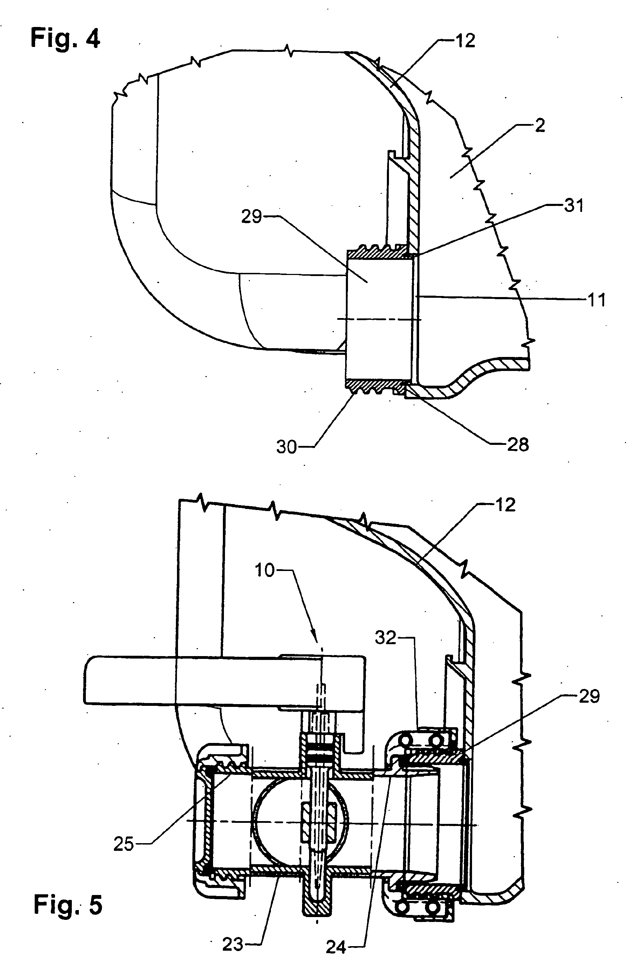

Bei einem weiteren anhand der Figuren 4 und 5 verdeutlichten Verfahren zur Herstellung eines mit einer Entnahmearmatur 10 ausgestatteten Flüssigkeitsbehälters 2 wird ein als Spritzgießteil vorgefertigter, mit einem Außengewinde 30 versehener Entleerstutzen 29 am Außenrand 28 der Entleeröffnung 11 des Behälters 2 mittels einer Spiegelschweißmaschine angeschweißt, wobei der Entleerstutzen 29 durch einen an diesem angeformten Ringansatz 31 in der Entleeröffnung 11 des Behälters 2 zentriert wird. An den an dem Flüssigkeitsbehälter 2 angeschweißten Entleerstutzen 29 wird die fertig vormontierte Entnahmearmatur 10 mit einer auf deren Einlaufstutzen 24 gehaltenen Überwurfmutter 32 angeschraubt.

## Patentansprüche

1. Verfahren zur Herstellung von Kunststoffbehältern für Flüssigkeiten, mit vier Seitenwänden, einem unteren und einem oberen Boden, einer verschließbaren Einfüllöffnung im oberen Boden und einer Entnahmearmatur aus Kunststoff, insbesondere einem Klappen- oder Kugelhahn, mit einem Armaturengehäuse, das einen Einlauf- und einen Auslaufstutzen aufweist, wobei der Einlaufstutzen des Armaturengehäuses an eine Entleeröffnung in einer unteren Einwölbung der Vorderwand des Behälters zur Aufnahme der Entnahmearmatur angeschlossen ist, **gekennzeichnet durch** das Blasformen des Behälters (2) mit mindestens einem Haltesegment (18) an der Außenseite (19) der Einwölbung (12) der Vorderwand (3) des Behälters (2) zum Zentrieren und Halten des fertig geblasenen Behälters (2) in einer Schweißmaschine und einer runden Vertiefung (20) in der Außenseite (19) der Einwölbung (12) mit einem der Nennweite der Entnahmearmatur (10) entsprechenden Durchmesser (21), das Ausschneiden des Bodens (22) der Vertiefung (20) mit einem in dieser zentrierten Schneidwerkzeug zur Ausbildung der Entleeröffnung (11) des Behälters (2) sowie das Anschweißen der Entnahmearmatur (10) mit einem an deren Einlaufstutzen (24) angeformten Befestigungsflansch (26) am Außenrand (28) der-Entleeröffnung (11) des Behälters (2).

2. Verfahren zur Herstellung eines Kunststoffbehälters für Flüssigkeiten nach dem Oberbegriff des Anspruchs 1, **gekennzeichnet durch** das Blasformen des Behälters (2) mit mindestens einem Haltesegment (18) an der Außenseite (19) der Einwölbung (12) der Vorderwand (3) des Behälters (2) zum Zentrieren und Halten des fertig geblasenen Behälters (2) in einer Schweißmaschine und einer runden Vertiefung (20) in der Außenseite (19) der Einwölbung (12) mit einem der Nennweite der Entnahmearmatur (10) entsprechenden Durchmesser (21), das Ausschneiden des Bodens (22) der Vertiefung (20) mit einem in dieser zentrierten Schneidwerkzeug zur Ausbildung der Entleeröffnung (11) des Behälters (2) sowie das Anschweißen eines mit einem Außengewinde (30) versehenen Entleerstutzens (29) aus Kunststoff am Außenrand (28) der Entleeröffnung (11) des Behälters (2) zum Anschrauben der Entnahmearmatur (10) mit einer Überwurfmutter (32).

3. Verfahren nach Anspruch 1, **dadurch gekennzeichnet, daß** der Einlaufstutzen (24) der Entnahmearmatur (10) durch Spiegelschweißen am Außenrand (28) der aus der Einwölbung (12) der Behälterwand (3) ausgeschnittenen Entleeröffnung (11) des Behälters (2) angeschweißt wird.

4. Verfahren nach Anspruch 2, **dadurch gekennzeichnet, daß** der Entleerstutzen (29) durch Spiegelschweißen am Außenrand (28) der aus der Einwölbung (12) der Behältervorderwand (3) ausgeschnittenen Entleeröffnung (11) des Behälters (2) angeschweißt wird.

## Claims

1. A method for producing plastic containers for liquids, comprising four side walls, a lower and an upper base, a closable filler opening in the upper base and a removal fitting made of plastic, in particular a flap or ball valve, comprising a fitting housing, which encompasses an inlet and a discharge socket, wherein the inlet socket of the fitting housing is connected to an emptying opening in a lower indent of the front wall of the container for accommodating the removal fitting, **characterized by** the blow-molding of the container (2) with at least one holding segment (18) on the outer side (19) of the indent (12) front wall (3) of the container (2) for centering and holding the container (2), which has already been blow-molded, in a welding machine and a round depression (20) in the outer side (19) of the indent (12) comprising a diameter (21), which corresponds to the nominal width of the removal fitting (10), cutting out the base (22) of the depression (20) by means of a cutting tool, which is centered therein, for forming the emptying opening (11) of the container (2) as well as the welding of the removal fitting (10) to a fastening flange (26), which is integrally formed on the inlet socket (24) thereof, to the outer edge (28) of the emptying opening (11) of the container (2).

2. The method for producing a plastic container for liquids according to the preamble of claim 1, **characterized by** the blow-molding of the container (2) with at least one holding segment (18) on the outer side (19) of the indent (12) of the front wall (3) of the container (2) for centering and holding the container (2), which has already been blow-molded, in a welding machine and a round depression (20) in the outer side (19) of the indent (12) comprising a diameter (21), which corresponds to the nominal width of the removal fitting (10), cutting out the base (22) of the depression (20) by means of a cutting tool, which is centered therein, for forming the emptying opening (11) of the container (2) as well as the welding of an emptying fitting (29) made of plastic, which is provided with an external thread (30), on the outer edge (28) of the emptying opening (11) of the container (2) for tightening down the removal fitting (10) by means of a coupling nut (32).

3. The method according to claim 1, **characterized in that** the inlet socket (24) of the removal fitting (10) is welded to the outer edge (28) of the emptying opening (11) of the container (2), which is cut out of the indent (12) of the container wall (3), by means of mirror-imaged welding.

4. The method according to claim 2, **characterized in that** the emptying socket (29) is welded to the outer edge (28) of the emptying opening (11) of the container (2), which is cut out of the indent (12) of the container wall (3), by means of mirror-imaged welding.

## Revendications

1. Procédé de fabrication de récipients en matière plastique pour liquides, avec quatre parois latérales, un fond inférieur et un fond supérieur, un orifice de remplissage fermable dans le fond supérieur et un robinet de soutirage en matière plastique, notamment un robinet à clapet ou un robinet à boisseau sphérique avec un corps de robinet, qui comporte une tubulure d'entrée et une tubulure de sortie, la tubulure d'entrée du corps de robinet étant raccordée sur un orifice de vidange dans une voussure inférieure de la paroi avant du récipient pour recevoir le robinet de soutirage, **caractérisé par** le soufflage sur matrice du récipient (2) avec au moins un segment d'arrêt (18) sur la face extérieure (19) de la voussure (12) dans la paroi avant (3) du récipient (2) pour le centrage et le maintien du récipient (2) dont le soufflage est achevé dans une machine à souder et avec un creux (20) rond dans la face extérieure (19) de la voussure (12), d'un diamètre (21) correspondant à la largeur nominale du robinet de soutirage (10), par la découpe du fond (22) du creux (20) à l'aide d'un outil de coupe centré dans ce dernier pour la création de l'orifice de vidange (11) du récipient (2), ainsi que par le soudage du robinet de soutirage (10) sur une bride de fixation (26) rapportée sur la tubulure d'entrée (24) de ce dernier, sur le bord extérieur (28) de l'orifice de vidange (11) du récipient (2).

2. Procédé de fabrication d'un récipient en matière plastique pour des liquides selon le préambule de la revendication 1, **caractérisé par** le soufflage sur matrice du récipient (2) avec au moins un segment d'arrêt (18) sur la face extérieure (19) de la voussure (12) sur la paroi avant (3) du récipient (2) pour le centrage et le maintien du récipient (2) dont le soufflage est achevé dans une machine à souder et par un creux (20) rond dans la face extérieure (19) de la voussure (12), d'un diamètre (21) correspondant à la largeur nominale du robinet de soutirage (10), par la découpe du fond (22) du creux (20) avec un outil de coupe centré dans ce dernier pour la création de l'orifice de vidange (11) du récipient (2), ainsi que par le soudage d'une tubulure de vidange (29) munie d'un filetage (30) en matière plastique sur le bord extérieur (28) de l'orifice de vidange (11) du récipient (2) pour le vissage du robinet de soutirage (10) avec un écrou d'accouplement (32).

3. Procédé selon la revendication 1, **caractérisé en ce qu'**on soude la tubulure d'entrée (24) du robinet de soutirage (10) par soudage au miroir sur le bord extérieur (28) de l'orifice de vidange (11) du récipient (2), découpé dans la voussure (12) de la paroi du récipient (3).

4. Procédé selon la revendication 2, **caractérisé en ce qu'**on soude la tubulure de vidange (29) par soudage au miroir sur le bord extérieur (28) de l'orifice de vidange (11) du récipient (2), découpé dans la voussure (12) de la paroi avant du récipient (3).
